# EUROPEAN PATENT SPECIFICATION

(11) **EP 4 117 075 B1**
(45) Date of publication and mention of the grant of the patent: **29.04.2026**
(21) Application number: 21886695.2
(22) Date of filing: 21.10.2021
(51) Int. Cl.: H01M 10/0567, H01M 10/0569, H01M 4/36, H01M 10/0568, H01M 4/136, H01M 4/38, H01M 4/62, H01M 10/052, H01M 4/02

(54) **LITHIUM-SULFUR SECONDARY BATTERY COMPRISING CYCLIC CARBONATE-CONTAINING ELECTROLYTE**
LITHIUM-SCHWEFEL-SEKUNDÄRBATTERIE MIT EINEM CYCLISCHEN CARBONATHALTIGEN ELEKTROLYT
BATTERIE SECONDAIRE AU LITHIUM-SOUFRE COMPRENANT UN ÉLECTROLYTE CONTENANT DU CARBONATE CYCLIQUE

(30) Priority: 29.10.2020 KR 20200142338; 29.10.2020 KR 20200142351
(43) Date of publication of application: 11.01.2023
(73) Proprietor: LG Energy Solution, Ltd., Seoul 07335 (KR)
(72) Inventor: PARK, Intae, Daejeon 34122 (KR); KIM, Yonghwi, Daejeon 34122 (KR); PARK, Changhun, Daejeon 34122 (KR); LEE, Changhoon, Daejeon 34122 (KR)
(74) Representative: Goddar, Heinz J.
(86) International application number: PCT/KR2021/014791
(87) International publication number: WO 2022/092701

(56) References cited:
- JP-B2- 4 188 851
- KR-A- 20160 081 110
- KR-A- 20200 073 120
- KR-B1- 100 515 298
- KR-B1- 100 536 196
- KR-B1- 102 091 376

## Description

### [Technical Field]

The present invention relates to a lithium-sulfur secondary battery comprising an electrolyte containing a cyclic carbonate. Specifically, the present invention relates to a lithium-sulfur secondary battery comprising an electrolyte containing fluoroethylene carbonate, vinylene carbonate, or a combination thereof which is a cyclic carbonate. The present application claims the benefit of priorities based on Korean Patent Application Nos. 10-2020-0142338 and 10-2020-0142351 filed on October 29, 2020.

### [Background Art]

As the application area of secondary batteries is expanding to electric vehicles (EV) or energy storage devices (ESS), the lithium-ion secondary battery with relatively low weight-to-energy storage density (~ 250 Wh/kg) are facing limitations in application to such products. Alternatively, since the lithium-sulfur secondary battery can achieve a theoretically high weight-to-energy storage density (~ 2,600 Wh/kg), it is attracting attention as a next-generation secondary battery technology.

The lithium-sulfur secondary battery means a battery system using a sulfur-based material having a sulfur-sulfur bond (S-S bond) as a positive electrode active material and using lithium metal as a negative electrode active material. Sulfur, which is the main material of the positive electrode active material, has advantages that it is very rich in resources, is not toxic, and has a low atomic weight.

In the lithium-sulfur secondary battery, when discharging the battery, lithium, which is a negative electrode active material, is oxidized while releasing electron and thus ionizing, and the sulfur-based material, which is a positive electrode active material, is reduced while accepting the electron. The oxidation reaction of lithium is a process by which lithium metal releases electron and is converted to lithium cation. The reduction reaction of sulfur is a process by which the S-S bond accepts two electrons and is converted to a sulfur anion. The lithium cation produced by the oxidation reaction of lithium is transferred to the positive electrode through the electrolyte and is combined with the sulfur anion generated by the reduction reaction of sulfur to form a salt. Specifically, sulfur before discharging has a cyclic S₈ structure, which is converted to lithium polysulfide (LiSₓ) by the reduction reaction. When the lithium polysulfide is completely reduced, lithium sulfide (Li₂S) is produced.

For sulfur, which is a positive electrode active material, it is difficult to secure reactivity with electrons and lithium ions in a solid state due to its low electrical conductivity characteristics. In existing lithium-sulfur secondary batteries, an intermediate polysulfide in the form of Li₂Sₓ is generated to induce a liquid phase reaction and improve the reactivity. In this case, an ether-based solvent such as dioxolane and dimethoxy ethane, which are highly soluble for lithium polysulfide, is used as a solvent for the electrolyte solution. In a conventional lithium-sulfur secondary battery, a catholyte-type lithium-sulfur secondary battery system is built to improve the reactivity, and in this case, the reactivity and lifetime characteristics of sulfur are affected depending on the content of the electrolyte solution because of the characteristics of the lithium polysulfide dissolved in the electrolyte solution. In order to achieve high energy density, the electrolyte solution should be injected with a low content, but as the content of the electrolyte solution decreases, the concentration of lithium polysulfide in the electrolyte solution is increased, making it difficult for the battery to operate normally due to a decrease in the fluidity of the active material and an increase in side reactions.

In order to manufacture a lithium-sulfur secondary battery with high energy density, a battery system capable of operating a high-loading, low-porosity electrode is required, and research on such a battery system is continuously being conducted.

### [Prior Art Document]

### [Patent Document]

(Patent Document 1) Korean Patent Laid-open Publication No. 10-2019-0006923
JP 4 188851 B2 discloses a lithium secondary battery containing a lithium salt, a nonaqueous organic solvent, and an electrolyte additive selected from a group comprising a compound in the following formula 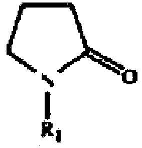 (in the formula, R1 is selected from a group comprising hydrogen, alkyl, aryl, cyclo alkyl, alkenyl, alknyl, ester, and carbonate) and their derivatives.

### [Disclosure]

### [Technical Problem]

It is an objective of the present invention to provide a lithium-sulfur secondary battery capable of improving the cycle performance of a lithium-sulfur secondary battery by adding a specific cyclic carbonate to the electrolyte of the lithium-sulfur secondary battery.

### [Technical Solution]

The above problems are solved in accordance with the subject-matter of the independent claims. Further embodiments result from the subclaims and the following written description.

The present invention provides a lithium-sulfur secondary battery comprising a positive electrode, a negative electrode, a separator and an electrolyte, and the electrolyte contains a cyclic carbonate.

The cyclic carbonate is fluoroethylene carbonate, vinylene carbonate or a combination thereof.

The cyclic carbonate is contained in the electrolyte in an amount of more than 0 ppm and less than 1,000 ppm based on the total weight of the electrolyte.

The electrolyte further contains a non-aqueous solvent and a lithium salt, and the non-aqueous solvent comprises a fluorinated linear ether.

In one exemplary embodiment of the present invention, the fluorinated linear ether is selected from the group consisting of 1,1,2,2-tetrafluoroethyl 2,2,3,3-tetrafluoropropyl ether, 1,1,2,2-tetrafluoroethyl 2,2,2-trifluoroethyl ether, bis(fluoromethyl) ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether, 1H,1H,2'H-perfluorodipropyl ether, and combinations thereof.

The non-aqueous solvent contains 50 wt.% to 99 wt.% of fluorinated linear ether based on the total weight of the non-aqueous solvent.

In one exemplary embodiment of the present invention, the lithium salt is selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃,

Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof.

In one exemplary embodiment of the present invention, the positive electrode comprises a positive electrode active material layer, and the positive electrode active material layer has a porosity of 30% or more and less than 70%.

In one exemplary embodiment of the present invention, the positive electrode has a loading amount of the positive electrode active material of 3.0 mAh/cm² to 10.0 mAh/cm².

In one exemplary embodiment of the present invention, the positive electrode includes a sulfur-carbon composite as a positive electrode active material.

In one exemplary embodiment of the present invention, the sulfur-carbon composite contains 60 wt.% to 90 wt.% of sulfur based on the total weight of the sulfur-carbon composite.

In one exemplary embodiment of the present invention, the non-aqueous solvent further includes non-fluorinated linear ether, cyclic ether, polyether, or a mixture thereof.

### [Advantageous Effects]

In the lithium-sulfur secondary battery according to the present invention, the cycle performance of the lithium-sulfur secondary battery is improved by adding a specific cyclic carbonate to the electrolyte.

Less than 1,000 ppm of fluoroethylene carbonate or vinylene carbonate is added to the electrolyte of the lithium-sulfur secondary battery as a specific cyclic carbonate. Considering that in the relevant technical field, generally, when the additive for the electrolyte is used in an amount of 1 wt.% (10,000 ppm) or more, the desired effect of improving the performance of the battery can be obtained, fluoroethylene carbonate or vinylene carbonate is different from general additives for the electrolyte used in the technical field.

When fluoroethylene carbonate or vinylene carbonate is used in the same amount as general additives for the electrolyte in the related art, the effect of improving the cycle performance of the lithium-sulfur secondary battery is insignificant or almost nonexistent.

In addition, even when used in a lithium secondary battery other than a lithium-sulfur secondary battery, the effect of improving the cycle performance of the lithium secondary battery is insignificant or almost nonexistent.

### [Detailed Description]

The exemplary embodiments provided according to the present invention can all be achieved by the following description. The following description is to be understood as describing preferred embodiments of the present invention, and the present invention is not necessarily limited thereto.

With respect to the physical properties described herein, if measurement conditions and methods are not specifically described, the physical properties are measured according to measurement conditions and methods generally used by those skilled in the art.

A "lithium secondary battery" is generally a higher concept than a lithium-sulfur secondary battery and comprises the lithium-sulfur secondary battery. However, the "lithium secondary battery" in this specification refers to a general lithium secondary battery using lithium metal oxide as a positive electrode active material, and is used separately from the lithium-sulfur secondary battery.

The present invention provides a lithium-sulfur secondary battery including a positive electrode, a negative electrode, a separator, and an electrolyte, wherein the electrolyte contains a cyclic carbonate. The cyclic carbonate is fluoroethylene carbonate (FEC), vinylene carbonate (VC), or a combination thereof. Fluoroethylene carbonate is a compound having a structure of Formula 1, and vinylene carbonate is a compound having a structure of Formula 2. The inventors of the present invention have completed the invention by confirming that the cycle performance of the battery is improved when a specific cyclic carbonate is added to the electrolyte in a lithium-sulfur secondary battery using a material containing sulfur as a positive electrode active material, not a general lithium secondary battery using lithium metal oxide as a positive electrode active material.

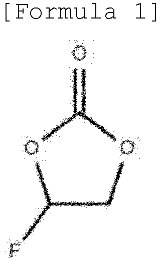

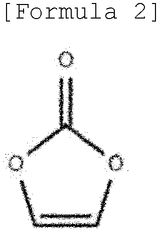

Considering that in the case of the lithium secondary battery, which has the same composition as a general lithium secondary battery except for the positive electrode active material, there is little or no effect of improving the cycle performance of the battery, it is expected that fluoroethylene carbonate or vinylene carbonate added to the electrolyte interacts directly with the positive electrode active material of the lithium-sulfur secondary battery.

The electrolyte contains more than 0 ppm, or may contain 50 ppm or more, 100 ppm or more, 150 ppm or more, 200 ppm or more, 250 ppm or more, 300 ppm or more, 350 ppm or more, 400 ppm or more, 450 ppm or more, or 500 ppm or more of the cyclic carbonate, based on the total weight of the electrolyte, and the electrolyte contains less than 1,000 ppm, or may contain 950 ppm or less, 900 ppm or less, 850 ppm or less, 800 ppm or less, 750 ppm or less, 700 ppm or less, 650 ppm or less, 600 ppm or less, 550 ppm or less or 500 ppm or less of the cyclic carbonate, based on the total weight of the electrolyte. One feature of the present invention is that a small amount, such as less than 1,000 ppm, of the cyclic carbonate is added to the electrolyte. If the cyclic carbonate is added in an amount of 1,000 ppm or more, there may be little or no effect of improving the cycle performance. In the related art, considering that the desired effect of improving the performance of the battery can be obtained, when the additives for the electrolyte solution are usually used in amounts of 1 wt.% (10,000 ppm) or more, the features described above are not common in the art.

The electrolyte constituting the lithium-sulfur secondary battery according to the present invention comprises a non-aqueous solvent and lithium salt in addition to the above-described cyclic carbonate. As described above, since the effect of improving the cycle performance of the battery by the use of the cyclic carbonate can occur by direct interaction between the cyclic carbonate and the positive electrode active material of the lithium-sulfur secondary battery, the types of the non-aqueous solvent and the lithium salt are not particularly limited. However, if a more suitable non-aqueous solvent and lithium salt are selected for the lithium-sulfur secondary battery, the overall cycle performance of the battery may be excellent.

According to one exemplary embodiment of the present invention, the non-aqueous solvent contains an ether-based solvent. The ether-based solvent is a linear ether.

The linear ether may be selected from the group consisting of methyl ethyl ether, methyl propyl ether, methyl butyl ether, ethyl propyl ether, ethyl isopropyl ether, ethyl butyl ether, ethyl isobutyl ether, diethyl ether, dipropyl ether, dibutyl ether, dimethoxy methane (DMM), trimethoxy methane (TMM), dimethoxy ethane (DME), diethoxy ethane (DEE), dimethoxy propane (DMP), and combinations thereof, but is not limited thereto.
, and combinations thereof, but is not limited thereto.

The linear etheris fluorinated ether compounds. The fluorinated form of the compound is a fluorinated linear ether, and the fluorinated linear ether may be selected from the group consisting of 1,1,2,2-tetrafluoroethyl 2,2,3,3-tetrafluoropropyl ether (TTE), 1,1,2,2-tetrafluoroethyl 2,2,2-trifluoroethyl ether, bis(fluoromethyl) ether, bis(2,2,2-trifluoroehtyl) ether, propyl 1,1,2,2-tetrafluoroethyl ether, isopropyl 1,1,2,2-tetrafluoroehtyl ether, 1,1,2,2-tetrafluoroethyl isobutyl ether, 1,1,2,3,3,3-hexafluoropropyl ethyl ether, 1H,1H,2'H,3H-decafluorodipropyl ether, 1H,1H,2'H-perfluorodipropyl ether, and combinations thereof, but is not limited thereto.

The fluorinated ether compound may be used in combination with a non-fluorinated linear ether, a cyclic ether, a polyether, or a combination thereof. The fluorinated linear ether compound is contained in the electrolyte in an amount of 50 wt.% to 99 wt.%, preferably 60 wt.% to 95 wt.%, more preferably 70 wt.% to 90 wt.%, based on the total weight of the solvent constituting the electrolyte. If the fluorinated ether compound is contained in the electrolyte in an amount of 50 wt.% or more, based on the total weight of the solvent constituting the electrolyte, the performance of the battery may be improved when used with the positive electrode of the lithium-sulfur secondary battery, which has low porosity and high loading amount of positive electrode active material.

The lithium salt is a material that can be easily dissolved in a non-aqueous solvent, and may be selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof.

The concentration of the lithium salt may be 0.1 M to 8.0 M, preferably 0.5 M to 5.0 M, more preferably, 1.0 M to 3.0 M, depending on various factors such as the exact composition of the electrolyte solution mixture, the solubility of the salt, the conductivity of the dissolved salt, the charging and discharging conditions of the battery, the operating temperature and other factors known in the lithium secondary battery field. If the concentration of the lithium salt is less than the above range, the conductivity of the electrolyte solution may be lowered and thus the performance of the electrolyte may deteriorate. If the concentration of the lithium salt exceeds the above range, the viscosity of the electrolyte solution may increase and thus the mobility of the lithium ion (Li⁺) may be reduced. Therefore, it is preferable to select an appropriate concentration of lithium salt within the above range.

The positive electrode constituting the lithium-sulfur secondary battery according to the present invention generally comprises a positive electrode current collector and a positive electrode active material layer formed on the positive electrode current collector. The positive electrode active material layer comprises a positive electrode active material, an electrically conductive material, and a binder.

The positive electrode current collector is not particularly limited as long as it has a high electrical conductivity without causing chemical changes in the battery, and for example, may be stainless steel, aluminum, nickel, titanium, sintered carbon, or aluminum or stainless steel surface-treated with carbon, nickel, titanium, silver, or the like. In addition, the positive electrode current collector may typically have a thickness of 3 µm to 500 µm, and may increase the adhesive force with the positive electrode active material by forming fine irregularities on the surface of the current collector. For example, the positive electrode current collector may be formed in various forms such as film, sheet, foil, net, porous body, foam, or nonwoven fabric.

The positive electrode active material is generally applied to a lithium-sulfur secondary battery, and includes, for example, elemental sulfur (S₈) and sulfur-based compounds or mixtures thereof. Specifically, the sulfur-based compound may be Li₂Sₙ(n≥1), organosulfur compounds or sulfur-carbon compounds ((C₂Sₓ)ₙ: x=2.5 ~ 50, n≥2), etc. Since the element sulfur alone does not have electrical conductivity, it can be combined with a carbon material and used in the form of a sulfur-carbon composite.

The sulfur-carbon composite may have a particle size of 1µm to 100µm. If the particle size of the sulfur-carbon composite is less than 1µm, there is a problem that the resistance between the particles increases and an overvoltage occurs in the electrode of the lithium-sulfur secondary battery. If the particle size exceeds 100 µm, the surface area per unit weight is reduced, and thus the wetting area with the electrolyte in the electrode and the reaction site with the lithium ion are decreased, and the amount of electron transfer relative to the size of the composite is reduced, so that the reaction can be delayed, and as a result, the discharging capacity of the battery can be reduced.

Sulfur may be contained in the sulfur-carbon composite in an amount of 60 wt.% to 90 wt.%, preferably 70 wt.% to 80 wt.%, based on the total weight of the sulfur-carbon composite. If the sulfur is contained in the sulfur-carbon composite in an amount of less than 60 wt.%, there may be a problem that the energy density of the battery decreases. If the sulfur is contained in the sulfur-carbon composite in an amount of more than 90 wt.%, there may be a problem that the conductivity of the electrode is lowered and the functionality of the positive electrode active material is lowered.

The carbon material (or sulfur support material) constituting the sulfur-carbon composite has porosity, and in particular, since the carbon material used as the positive electrode active material of the present invention has characteristics of high specific surface area (3,000 m²/g or more) and high porosity (pore volume per unit weight: 0.7 to 3.0 cm³/g), it can support a large amount of sulfur.

The carbon material may be, for example, at least one selected from the group consisting of graphite; graphene; reduced graphene oxide (rGO); carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon, and its shape may be in the form of sphere, rod, needle, plate, tube, or bulk.

The positive electrode active material may be contained in the positive electrode active material layer in an amount of 80 wt.% to 99 wt.%, preferably 85 wt.% to 95 wt.%, based on the total weight of the positive electrode active material layer. If the positive electrode active material is contained in the positive electrode active material layer in an amount of less than 80 wt.%, there may be a problem that the energy density of the battery decreases. If the positive electrode active material is contained in the positive electrode active material layer in an amount greater than 99 wt.%, there may be a problem that the bonding force between the positive electrode active materials may be lowered because the content of the binder is insufficient, and the conductivity in the electrode is lowered because the content of the electrically conductive material is insufficient.

The electrically conductive material is used for imparting conductivity to the electrode, and can be used without any particular limitation as long as it has electronic conductivity without causing chemical change in constituting the battery. Specific examples thereof may comprise graphite such as natural graphite or artificial graphite; carbon-based materials such as carbon black, acetylene black, Ketjen black, channel black, furnace black, lamp black, thermal black and carbon fiber; metal powders or metal fibers such as copper, nickel, aluminum, and silver; electrically conductive whiskers such as zinc oxide and potassium titanate; electrically conductive metal oxides such as titanium oxide; or electrically conductive polymers such as polyphenylene derivatives, and one of these or a mixture of two or more thereof may be used.

The electrically conductive material may be contained in the positive electrode active material layer in an amount of 0.1 wt.% to 15 wt.%, preferably 0.5 to 10 wt.%, based on the total weight of the positive electrode active material layer. If the electrically conductive material is contained in the positive electrode active material layer in an amount of less than 0.1 wt.%, there may be a problem that the conductivity in the electrode is reduced because the content of the electrically conductive material is insufficient. If the electrically conductive material is contained in the positive electrode active material layer in an amount of more than 15 wt.%, there may be a problem that the discharging capacity and energy density of the battery are lowered because the amount of the positive electrode active material is relatively small.

The binder serves to improve the adhesion between the positive electrode active material particles and the adhesive force between the positive electrode active material and the current collector. Specific examples thereof may comprise polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene-butadiene rubber(SBR), fluorine rubber, or various copolymers thereof, and one of these or a mixture of two or more thereof may be used.

The binder may be contained in the positive electrode active material layer in an amount of 0.1 wt.% to 15 wt.%, preferably 0.5 to 10 wt.%, based on the total weight of the positive electrode active material layer. If the binder is contained in the positive electrode active material layer in an amount of less than 0.1 wt.%, there may be a problem that the bonding force between the positive electrode active materials may be reduced because the content of the binder is insufficient. If the binder is contained in the positive electrode active material layer in an amount greater than 15 wt.%, there may be a problem that the discharging capacity and energy density of the battery are reduced because the amount of positive electrode active material is relatively small.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode of the lithium-sulfur secondary battery according to the present invention may have a lower porosity than the positive electrode of the general lithium-sulfur secondary battery in the related art. Here, the porosity is the ratio of the pore volume to the total volume of the positive electrode, and is usually expressed as a percentage. If the positive electrode of the general lithium-sulfur secondary battery has low porosity, it is not able to properly implement the performance of the battery because it may not be easy to move the material according to the penetration of the electrolyte. Even if it were so, if the porosity of a positive electrode of a lithium-sulfur secondary battery is increased, it may be undesirable because the volume of the positive electrode is increased to load the same amount of a positive electrode active material. If the electrolyte according to the present invention is applied to a lithium-sulfur secondary battery, it may be more preferable because the performance of the battery can be properly implemented in a positive electrode having a high porosity as well as a positive electrode having a low porosity. According to one exemplary embodiment of the present invention, the positive electrode active material layer in the positive electrode has a porosity of 30% or more and less than 70%, preferably 50% to 65%, more preferably 55% to 65%. The porosity of less than 70% is lower than the porosity of the positive electrode active material layer of a typical lithium-sulfur secondary battery in the related art. If the performance of the battery can be properly implemented in the related porosity, there is an advantage that it is possible to reduce the volume of the positive electrode for loading the same amount of a positive electrode active material. The porosity can be measured by a method generally used in the related technical field. The porosity was calculated by measuring the thickness of the positive electrode active material layer through the equipment (TESA, u-hite) for measuring the thickness of a material, and then using the true density of the positive electrode active material layer measured through the equipment (Microtrac, BELPycno) for measuring the true density of a material.

The positive electrode of the lithium-sulfur secondary battery according to the present invention may have a higher loading amount of the positive electrode active material than the positive electrode of a general lithium-sulfur secondary battery in the related art. In general, if the loading amount of the positive electrode active material is increased, the volume of the positive electrode is inevitably increased. However, in the case of the lithium-sulfur secondary battery according to the present invention, it is possible to keep the loading of the positive electrode active material high even in a relatively small volume because the porosity of the positive electrode can be lowered, as described above. According to one exemplary embodiment of the present invention, the positive electrode has a loading amount of the positive electrode active material of 3.0 mAh/cm² to 10.0 mAh/cm², preferably **3.5** mAh/cm² to 7.0 mAh/cm², more preferably 4.0 mAh/cm² to 7.0 mAh/cm². Theoretically, increasing the loading amount of the positive electrode active material can improve the performance of the battery, but there is a limit to increasing the loading amount of the positive electrode active material due to the problem caused by the increase in the electrode volume and the difference between the theoretical discharging capacity and the actual discharging capacity. The loading amount of the positive electrode active material is calculated by dividing the theoretical discharging capacity (mAh) of the positive electrode active material loaded on the positive electrode by the area (cm²) of the surface where the positive electrode active material layer and the positive electrode current collector are in contact. For example, sulfur has a theoretical specific discharging capacity of 1,675 mAh/g, and the theoretical discharging capacity of sulfur can be calculated by multiplying the theoretical specific discharging capacity by the mass (g) of sulfur loaded on the positive electrode.

The negative electrode constituting the lithium-sulfur secondary battery according to the present invention comprises a negative electrode current collector and a negative electrode active material layer formed on the negative electrode current collector.

The negative electrode active material layer comprises a negative electrode active material, a binder, and an electrically conductive material. The negative electrode active material may be a material capable of reversibly intercalating or de-intercalating lithium ion (Li⁺), a material capable of reacting with lithium ion to reversibly form a lithium-containing compound, lithium metal or a lithium alloy. The material capable of reversibly intercalating or de-intercalating lithium ion (Li⁺) may be, for example, crystalline carbon, amorphous carbon or mixtures thereof. The material capable of reacting with lithium ion (Li⁺) to reversibly form a lithium-containing compound may be, for example, tin oxide, titanium nitrate or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

The binder, the electrically conductive material, and the negative electrode current collector may be selected with reference to the configuration of the above-described positive electrode, but are not necessarily limited thereto. In addition, the method of forming the negative electrode active material layer on the negative electrode current collector is based on a known coating method as in the positive electrode, and is not particularly limited.

The separator for the lithium-sulfur secondary battery according to the present invention is a physical separator having a function of physically separating electrodes. The separator can be used without special restrictions, as long as it is used as a conventional separator. Particularly, a separator with excellent electrolyte solution humidification ability while exhibiting low resistance to ion migration of electrolyte solution is preferable. The separator enables the lithium ion to be transported between the positive electrode and the negative electrode while separating or insulating the positive electrode and the negative electrode from each other. Such separator may be made of a porous, nonconductive or insulating material having a porosity of 30% to 50%. Specifically, a porous polymer film, for example, a porous polymer film made of a polyolefin-based polymer such as ethylene homopolymer, propylene homopolymer, ethylene/butene copolymer, ethylene/hexene copolymer and ethylene/methacrylate copolymer, etc. may be used, and a nonwoven fabric made of glass fiber having high melting point or the like can be used. Among them, the porous polymer film is preferably used.

If the polymer film is used for both the buffer layer and the separator, the impregnation amount and ion conduction characteristics of the electrolyte solution decreases and the effect of reducing the overvoltage and improving the capacity characteristics becomes insignificant. On the contrary, if the nonwoven fabric material is used for both the buffer layer and the separator, a mechanical stiffness cannot be ensured and thus a problem of short circuit of the battery occurs. However, if a film-type separator and a polymer nonwoven fabric buffer layer are used together, the mechanical strength can also be ensured together with the improvement effect of the battery performance due to the adoption of the buffer layer.

According to one exemplary embodiment of the present invention, the ethylene homopolymer (polyethylene) polymer film is used as a separator, and the polyimide nonwoven fabric is used as a buffer layer. In that case, it is preferable that the polyethylene polymer film has a thickness of 10µm to 25 µm and a porosity of 40% to 50%.

The lithium-sulfur secondary battery of the present invention can be manufactured by disposing a separator between a positive electrode and a negative electrode to form an electrode assembly and inserting the electrode assembly into a cylindrical battery case or a rectangular battery case, and then injecting an electrolyte. Alternatively, the lithium-sulfur secondary battery of the present invention can be manufactured by laminating the electrode assembly, impregnating the electrode assembly with the electrolyte, putting the obtained result into a battery case and then sealing it.

Hereinafter, preferred examples will be described in order to facilitate understanding of the present invention. However, the following examples are provided to facilitate understanding of the present invention, but the present invention is not limited thereto.

### Examples

### Example 1

To the solvent obtained by mixing dimethoxyethane (DME) and 1,1,2,2-tetrafluoroethyl 2,2,3,3-tetrafluoropropyl ether (TTE) in a 3:7 volume ratio, lithium bis(trifluoromethanesulfonyl)imide (LiTFSI, LiN(CF₃SO₂)₂) was added at a concentration of 1.0 M and mixed, and then 500 ppm of fluoroethylene carbonate was added to the mixture to prepare an electrolyte for a lithium-sulfur secondary battery.

90 parts by weight of sulfur-carbon composite (S:C=75:25 weight ratio) (in the sulfur-carbon composite, activated carbon with a pore volume of 1.8 cm³/g was used) as a positive electrode active material, 5 parts by weight of Denka Black as an electrically conductive material and 5 parts by weight of styrene butadiene rubber/carboxymethyl cellulose (SBR:CMC=7:3) as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 4.0 mAh/cm², and the porosity of the positive electrode active material layer in the positive electrode was 65%).

The prepared positive electrode and the lithium metal negative electrode having a thickness of 60 µm were placed to face each other, and a polyethylene (PE) separator was interposed between them, and then the prepared electrolyte was injected to manufacture a coin cell type lithium-sulfur secondary battery. In the manufacture of the lithium-sulfur secondary battery, the positive electrode was punched out and used as a 14 phi circular electrode, the polyethylene separator was punched out and used as a 19 phi separator, the lithium metal was punched out and used as a 16 phi negative electrode.

### Comparative Example 1

A lithium-sulfur secondary battery was prepared in the same manner as in Example 1, except that fluoroethylene carbonate was not added when manufacturing the electrolyte.

### Comparative Example 2

A lithium-sulfur secondary battery was prepared in the same manner as in Example 1, except that 5,000 ppm of fluoroethylene carbonate was added when manufacturing the electrolyte.

### Comparative Example 3

A lithium secondary battery was prepared in the same manner as in Example 1, except that the positive electrode was manufactured by the following method.

90 parts by weight of LiNi_{0.6}Co_{0.2}Mn_{0.2}O₂(NCM 622) as a positive electrode active material, 5 parts by weight of Super-P as an electrically conductive material and 5 parts by weight of a polyvinylidene fluoride (PVDF) binder as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 3.0 mAh/cm², and the porosity of the positive electrode active material layer in the positive electrode was 30%).

### Comparative Example 4

A lithium secondary battery was prepared in the same way as in Comparative Example 3, except that fluoroethylene carbonate was not added when preparing the electrolyte.

### Comparative Example 5

A lithium secondary battery was prepared in the same way as in Comparative Example 3, except that 5,000 ppm of fluoroethylene carbonate was added when preparing the electrolyte.

### Comparative Example 6

A lithium secondary battery was prepared in the same way as in Comparative Example 3, except that the electrolyte was prepared by the following method.

To the solvent obtained by mixing ethylene carbonate (EC) and ethylmethyl carbonate (EMC) in a 3:7 volume ratio, lithium hexafluorophosphate (LiPF₆) was added at a concentration of 1.0M and mixed, and then 500 ppm of fluoroethylene carbonate was added to the mixture to prepare an electrolyte for a lithium secondary battery.

### Comparative Example 7

A lithium secondary battery was prepared in the same way as in Comparative Example 6, except that fluoroethylene carbonate was not added when preparing the electrolyte.

### Comparative Example 8

A lithium secondary battery was prepared in the same way as in Comparative Example 6, except that 5,000 ppm of fluoroethylene carbonate was added when preparing the electrolyte.

### Example 2

A lithium-sulfur secondary battery was prepared in the same manner as in Example 1, except that vinylene carbonate was added instead of fluoroethylene carbonate when preparing the electrolyte.

### Comparative Example 9

A lithium-sulfur secondary battery was prepared in the same manner as in Example 2, except that vinylene carbonate was not added when preparing the electrolyte.

### Comparative Example 10

A lithium-sulfur secondary battery was prepared in the same manner as in Example 2, except that 5,000 ppm of vinylene carbonate was added when preparing the electrolyte.

### Comparative Example 11

A lithium secondary battery was prepared in the same way as in Example 2, except that the positive electrode was prepared by the following method.

90 parts by weight of LiNi_{0.6}Co_{0.2}Mn_{0.2}O₂ (NCM 622) as a positive electrode active material, 5 parts by weight of Super-P as an electrically conductive material and 5 parts by weight of a polyvinylidene fluoride (PVDF) binder as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 3.0 mAh/cm², and the porosity of the positive electrode active material layer in the positive electrode was 30%).

### Comparative Example 12

A lithium secondary battery was prepared in the same way as in Comparative Example 11, except that vinylene carbonate was not added when preparing the electrolyte.

### Comparative Example 13

A lithium secondary battery was prepared in the same manner as in Comparative Example 11, except that 5,000 ppm of vinylene carbonate was added when preparing the electrolyte.

### Comparative Example 14

A lithium secondary battery was prepared in the same way as in Comparative Example 11, except that the electrolyte was prepared by the following method.

To the solvent obtained by mixing ethylene carbonate (EC) and ethylmethyl carbonate (EMC) in a 3:7 volume ratio, lithium hexafluorophosphate (LiPF₆) was added at a concentration of 1.0M and mixed, and then 500 ppm of vinylene carbonate was added to the mixture to prepare an electrolyte for a lithium secondary battery.

### Comparative Example 15

A lithium secondary battery was prepared in the same way as in Comparative Example 14, except that vinylene carbonate was not added when preparing the electrolyte.

### Comparative Example 16

A lithium secondary battery was prepared in the same manner as in Comparative Example 14, except that 5,000 ppm of vinylene carbonate was added when preparing the electrolyte.

### Experimental Example: Evaluation of the cycle performance of the manufactured battery

### Experimental Example 1: Evaluation for fluoroethylene carbonate

The lithium-sulfur secondary battery manufactured in Example 1 and the lithium secondary batteries manufactured in Comparative Examples 1 to 8 were charged and discharged at a rate of 0.3C to evaluate the cycle performance of the batteries. The voltage ranges for charging and discharging were set to 1.0V~3.6V for the lithium-sulfur secondary battery and 2.7V~4.4V for the lithium secondary batteries in consideration of the optimal conditions depending on the type of batteries, and the cycle performance of the battery was evaluated under a temperature condition of 25°C. The cycle performance of the battery was evaluated by the number of cycles when it exhibited a discharging capacity of 80% or more based on the initial discharging capacity, and when the number of related cycles was exceeded, the discharging capacity was dropped to less than 80% based on the initial discharging capacity. The evaluation results are shown in Table 1.

**Table 1:**

| | Number of cycles |
|---|---|
| Example 1 | 75 |
| Comparative Example 1 | 50 |
| Comparative Example 2 | 44 |
| Comparative Example 3 | 20 |
| Comparative Example 4 | 20 |
| Comparative Example 5 | 21 |
| Comparative Example 6 | 49 |
| Comparative Example 7 | 50 |
| Comparative Example 8 | 54 |

As shown in Table 1, it was confirmed that when 500 ppm of fluoroethylene carbonate was added to the electrolyte of the lithium-sulfur secondary battery (Example 1), cycle performance was significantly improved compared to the case where fluoroethylene carbonate was not added (Comparative Example 1). However, it was confirmed that when 5,000 ppm of fluoroethylene carbonate was added to the electrolyte of the lithium-sulfur secondary battery (Comparative Example 2), the effect of the addition of fluoroethylene carbonate was not observed, and rather, the cycle performance was lowered compared to the case where fluoroethylene carbonate is not added (Comparative Example 1).

In addition, in the case of the lithium secondary battery that uses lithium metal oxide (NCM 622), not sulfur-carbon composite, as a positive electrode active material, as the cycles of the battery were proceeded, the ether-based solvent may be decomposed in the electrolyte containing the ether-based solvent, and thus cycle performance was generally measured to be low. Unlike the lithium-sulfur secondary battery, in the case of the lithium secondary battery, the cycle performance was not particularly improved, compared to the case where 500 ppm of fluoroethylene carbonate was added to the electrolyte (Comparative Example 3), the case where fluoroethylene carbonate was not added (Comparative Example 4) and the case where 5,000 ppm of fluoroethylene carbonate was added (Comparative Example 5).

In order to confirm whether the results of Comparative Examples 3 to 5 are due to the problem of the solvent of the electrolyte, additional experiments were conducted using an electrolyte containing a carbonate-based solvent suitable for a lithium secondary battery using lithium metal oxide (NCM 622) as a positive electrode active material. In the electrolyte containing the carbonate-based solvent, the carbonate-based solvent was hardly decomposed even when the cycles were proceeded, and thus the cycle performance was generally similar to that of the lithium-sulfur secondary battery. However, even in the case of the lithium secondary battery using the electrolyte containing the carbonate-based solvent (Comparative Examples 6 to 8), the cycle performance was not particularly improved in the lithium secondary battery, as in the case of the lithium secondary battery using the electrolyte containing the ether-based solvent (Comparative Examples 3 to 5), compared to the case where 500 ppm of fluoroethylene carbonate was added to the electrolyte (Comparative Example 6), the case where fluoroethylene carbonate was not added (Comparative Example 7) and the case where 5,000 ppm of fluoroethylene carbonate was added (Comparative Example 8).

### Experimental Example 2: Evaluation for vinylene carbonate

The lithium-sulfur secondary battery manufactured in Example 2 and the lithium secondary batteries manufactured in Comparative Examples 9 to 16 were charged and discharged at a rate of 0.3C to evaluate the cycle performance of the batteries. The voltage ranges for charging and discharging were set to 1.0~3.6V for the lithium-sulfur secondary battery and 2.7~4.4V for the lithium secondary batteries in consideration of the optimal conditions depending on the type of batteries, and the cycle performance of the battery was evaluated under a temperature condition of 25°C. The cycle performance of the battery was evaluated by the number of cycles when it exhibited a discharging capacity of 80% or more based on the initial discharging capacity, and when the number of related cycles was exceeded, the discharging capacity was dropped to less than 80% based on the initial discharging capacity. The evaluation results are shown in Table 2.

**Table 2:**

| | Number of cycles |
|---|---|
| Example 2 | 70 |
| Comparative Example 9 | 50 |
| Comparative Example 10 | 43 |
| Comparative Example 11 | 20 |
| Comparative Example 12 | 22 |
| Comparative Example 13 | 19 |
| Comparative Example 14 | 48 |
| Comparative Example 15 | 50 |
| Comparative Example 16 | 52 |

As shown in Table 2, it was confirmed that when 500 ppm of vinylene carbonate was added to the electrolyte of the lithium-sulfur secondary battery (Example 2), cycle performance was significantly improved compared to the case where vinylene carbonate was not added (Comparative Example 9). However, it was confirmed that when 5,000 ppm of vinylene carbonate was added to the electrolyte of the lithium-sulfur secondary battery (Comparative Example 10), the effect of the addition of vinylene carbonate was not observed, and rather, the cycle performance was lowered compared to the case where vinylene carbonate is not added (Comparative Example 9).

In addition, in the case of the lithium secondary battery that uses lithium metal oxide (NCM 622), not sulfur-carbon composite, as a positive electrode active material, as the cycles of the battery were proceeded, the ether-based solvent may be decomposed in the electrolyte containing the ether-based solvent, and thus cycle performance was generally measured to be low. Unlike the lithium-sulfur secondary battery, in the case of the lithium secondary battery, the cycle performance was not particularly improved, compared to the case where 500 ppm of vinylene carbonate was added to the electrolyte (Comparative Example 11), the case where vinylene carbonate was not added (Comparative Example 12) and the case where 5,000 ppm of vinylene carbonate was added (Comparative Example 13).

In order to confirm whether the results of Comparative Examples 11 to 13 are due to the problem of the solvent of the electrolyte, additional experiments were conducted using an electrolyte containing a carbonate-based solvent suitable for a lithium secondary battery using lithium metal oxide (NCM 622) as a positive electrode active material. In the electrolyte containing the carbonate-based solvent, the carbonate-based solvent was hardly decomposed even when the cycles were proceeded, and thus the cycle performance was generally similar to that of the lithium-sulfur secondary battery. However, even in the case of the lithium secondary battery using the electrolyte containing the carbonate-based solvent (Comparative Examples 14 to 16), the cycle performance was not particularly improved in the lithium secondary battery, as in the case of the lithium secondary battery using the electrolyte containing the ether-based solvent (Comparative Examples 11 to 13), compared to the case where 500 ppm of vinylene carbonate was added to the electrolyte (Comparative Example 14), the case where vinylene carbonate was not added (Comparative Example 15) and the case where 5,000 ppm of vinylene carbonate was added (Comparative Example 16).

All simple modifications and variations of the present invention fall within the scope of the present invention, and the specific protection scope of the present invention is defined by the appended claims.

## Claims

1. A lithium-sulfur secondary battery comprising a positive electrode, a negative electrode, a separator, and an electrolyte,
wherein the electrolyte contains a cyclic carbonate, and the cyclic carbonate is fluoroethylene carbonate, vinylene carbonate, or a combination thereof,
an amount of the cyclic carbonate in the electrolyte is more than 0 ppm and less than 1,000 ppm based on a total weight of the electrolyte;
the electrolyte further comprises a non-aqueous solvent and a lithium salt, and the non-aqueous solvent contains a fluorinated linear ether; and
the non-aqueous solvent comprises 50 wt.% to 99 wt.% of the fluorinated linear ether based on a total weight of the non-aqueous solvent.

2. The lithium-sulfur secondary battery according to claim 1, wherein the fluorinated linear ether is selected from the group consisting of 1,1,2,2-tetrafluoroethyl 2,2,3,3-tetrafluoropropyl ether, 1,1,2,2-tetrafluoroethyl 2,2,2-trifluoroethyl ether, bis(fluoromethyl) ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether, 1H,1H,2'H-perfluorodipropyl ether, and combinations thereof.

3. The lithium-sulfur secondary battery according to claim 1, wherein the lithium salt is selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof.

4. The lithium-sulfur secondary battery according to claim 1, wherein the positive electrode comprises a positive electrode active material layer, and the positive electrode active material layer has a porosity of 30% or more and less than 70%.

5. The lithium-sulfur secondary battery according to claim 1, wherein a loading amount of the positive electrode active material of the positive electrode is 3.0 mAh/cm² to 10.0 mAh/cm².

6. The lithium-sulfur secondary battery according to claim 1, wherein the positive electrode comprises a positive electrode active material, and the positive electrode active material is a sulfur-carbon composite.

7. The lithium-sulfur secondary battery according to claim 6, wherein the sulfur-carbon composite comprises 60 wt.% to 90 wt.% of sulfur based on a total weight of the sulfur-carbon composite.

8. The lithium-sulfur secondary battery according to claim 1, wherein the non-aqueous solvent further comprises a non-fluorinated linear ether, a cyclic ether, a polyether or a mixture thereof.

## Patentansprüche

1. Lithium-Schwefel-Sekundärbatterie, umfassend eine positive Elektrode, eine negative Elektrode, einen Separator und einen Elektrolyten,
wobei der Elektrolyt ein cyclisches Carbonat enthält und das cyclische Carbonat Fluorethylencarbonat, Vinylencarbonat oder eine Kombination davon ist,
eine Menge des cyclischen Carbonats in dem Elektrolyten mehr als 0 ppm und weniger als 1.000 ppm, bezogen auf ein Gesamtgewicht des Elektrolyten, beträgt;
der Elektrolyt ferner ein nichtwässriges Lösungsmittel und ein Lithiumsalz umfasst und das nichtwässrige Lösungsmittel einen fluorierten linearen Ether enthält; und
das nichtwässrige Lösungsmittel 50 Gew.-% bis 99 Gew.-% des fluorierten linearen Ethers, bezogen auf ein Gesamtgewicht des nichtwässrigen Lösungsmittels, umfasst.

2. Lithium-Schwefel-Sekundärbatterie nach Anspruch 1, wobei der fluorierte lineare Ether ausgewählt ist aus der Gruppe, bestehend aus 1,1,2,2-Tetrafluorethyl-2,2,3,3-tetrafluorpropylether, 1,1,2,2-Tetrafluorethyl-2,2,2-trifluorethylether, Bis(fluormethyl)ether, Bis(2,2,2-trifluorethyl)ether, Propyl-1,1,2,2-tetrafluorethylether, Isopropyl-1,1,2,2-tetrafluorethylether, 1,1,2,2-Tetrafluorethylisobutylether, 1,1,2,3,3,3-Hexafluorpropylethylether, 1H,1H,2'H,3H-Decafluordipropylether, 1H,1H,2'H-Perfluordipropylether und Kombinationen davon.

3. Lithium-Schwefel-Sekundärbatterie nach Anspruch 1, wobei das Lithiumsalz ausgewählt ist aus der Gruppe, bestehend aus LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂ und Kombinationen davon.

4. Lithium-Schwefel-Sekundärbatterie nach Anspruch 1, wobei die positive Elektrode eine Positivelektrodenaktivmaterialschicht umfasst und die Positivelektrodenaktivmaterialschicht eine Porosität von 30 % oder mehr und weniger als 70 % aufweist.

5. Lithium-Schwefel-Sekundärbatterie nach Anspruch 1, wobei eine Beladungsmenge des Positivelektrodenaktivmaterials der positiven Elektrode 3,0 mAh/cm² bis 10,0 mAh/cm² beträgt.

6. Lithium-Schwefel-Sekundärbatterie nach Anspruch 1, wobei die positive Elektrode ein Positivelektrodenaktivmaterial umfasst und das Positivelektrodenaktivmaterial ein Schwefel-Kohlenstoff-Verbundstoff ist.

7. Lithium-Schwefel-Sekundärbatterie nach Anspruch 6, wobei der Schwefel-Kohlenstoff-Verbundstoff 60 Gew.-% bis 90 Gew.-% Schwefel, bezogen auf ein Gesamtgewicht des Schwefel-Kohlenstoff-Verbundstoffs, umfasst.

8. Lithium-Schwefel-Sekundärbatterie nach Anspruch 1, wobei das nichtwässrige Lösungsmittel ferner einen nichtfluorierten linearen Ether, einen cyclischen Ether, einen Polyether oder eine Mischung davon umfasst.

## Revendications

1. Accumulateur lithium-soufre comprenant une électrode positive, une électrode négative, un séparateur et un électrolyte,
où l'électrolyte contient un carbonate cyclique, le carbonate cyclique étant le carbonate de fluoroéthylène, le carbonate de vinylène ou une combinaison de ceux-ci,
une quantité du carbonate cyclique dans l'électrolyte, rapportée à un poids total de l'électrolyte, est supérieure à 0 ppm et inférieure à 1 000 ppm ;
l'électrolyte comprend en outre un solvant non aqueux et un sel de lithium, et le solvant non aqueux contient un éther linéaire fluoré ; et
le solvant non aqueux comprend l'éther linéaire fluoré à un taux, rapporté à un poids total du solvant non aqueux, qui va de 50 % en poids à 99 % en poids.

2. Accumulateur lithium-soufre selon la revendication 1, où l'éther linéaire fluoré est sélectionné dans le groupe consistant en les suivants : éther de 1,1,2,2-tétrafluoroéthyle et de 2,2,3,3-tétrafluoropropyle, éther de 1,1,2,2-tétrafluoroéthyle et de 2,2,2-trifluoroéthyle, éther de bis(fluorométhyle), éther de bis(2,2,2-trifluoroéthyle), éther de propyle et de 1,1,2,2-tétrafluoroéthyle, éther d'isopropyle et de 1,1,2,2-tétrafluoroéthyle, éther de 1,1,2,2-tétrafluoroéthyle et d'isobutyle, éther de 1,1,2,3,3,3-hexafluoropropyle et d'éthyle, éther de 1H,1H,2'H,3H-décafluorodipropyle, éther de 1H,1H,2'H-perfluorodipropyle et combinaisons de ceux-ci.

3. Accumulateur lithium-soufre selon la revendication 1, où le sel de lithium est sélectionné dans le groupe consistant en les suivants : LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂ et combinaisons de ceux-ci.

4. Accumulateur lithium-soufre selon la revendication 1, où l'électrode positive comprend une couche d'un matériau actif d'électrode positive, la couche de matériau actif d'électrode positive ayant une porosité égale ou supérieure à 30 % et inférieure à 70 %.

5. Accumulateur lithium-soufre selon la revendication 1, où la quantité de charge du matériau actif d'électrode positive de l'électrode positive va de 3,0 mAh/cm² à 10,0 mAh/cm².

6. Accumulateur lithium-soufre selon la revendication 1, où l'électrode positive comprend un matériau actif d'électrode positive, le matériau actif d'électrode positive étant un composite soufre-carbone.

7. Accumulateur lithium-soufre selon la revendication 6, où le composite soufre-carbone comprend le soufre à un taux, rapporté à un poids total du composite soufre-carbone, qui va de 60 % en poids à 90 % en poids.

8. Accumulateur lithium-soufre selon la revendication 1, où le solvant non aqueux comprend en outre un éther linéaire non fluoré, un éther cyclique, un polyéther ou un mélange de ceux-ci.
